# FASCICULE DE BREVET EUROPEEN

(11) **EP 0 860 132 B1**
(45) Date de publication et mention de la délivrance du brevet: **25.09.2002**
(21) Numéro de dépôt: 98420032.9
(22) Date de dépôt: 19.02.1998
(51) Int. Cl.: A47J 37/08

(54) **Grille pain à positionnements multiples pour le chariot porte-pain**
Brotröster mit Mehrstellungsaufnahmefach
Toaster with multiple position rack

(30) Priorité: 21.02.1997 FR 9702319
(43) Date de publication de la demande: 26.08.1998
(73) Titulaire: SEB S.A., 69130 Ecully (FR)
(72) Inventeur: Mauffrey, Guy, 70280 Breuchotte (FR)

(56) Documents cités:
- CH-A- 380 255
- DE-U- 9 014 527
- US-A- 5 018 437

## Description

La présente invention se rapporte au domaine technique des appareils électroménagers de cuisson du type grille-pain.

L'invention concerne plus particulièrement un grille-pain dont le chariot porte-pain peut être disposé ou maintenu à différentes hauteurs dans l'enceinte de grillage, et ce après les opérations de grillage.

On connaît, par exemple par l'intermédiaire du document US-A-5,018,437, (base pour le préambule de la revendication 1) un grille-pain pourvu d'un système de maintien au chaud, dans lequel les articles à griller restent disposés pendant un certain temps, à la fin des opérations de grillage, dans l'enceinte de cuisson.

De tels grille-pain sont pourvus d'un mécanisme de blocage du chariot dans une position donnée, l'utilisateur pouvant désactiver le blocage à tout moment.

D'autres grille-pain sont pourvus d'un système de remontée complémentaire, permettant, par l'intermédiaire d'un actionnement particulier du chariot, de déplacer ce dernier vers la fente d'introduction du grille-pain. Ceci permet une meilleure préhension des petites tranches de pain à la fin des opérations de grillage, sans avoir à utiliser des ustensiles pour récupérer lesdites tranches.

Ainsi, le document DE 90 14 527 U décrit un grille-pain possédant deux sous-ensembles en interaction mécanique verticale, guidés chacun sur un rail vertical. Le sous-ensemble inférieur est lié à un ressort de rappel, permettant la remontée des deux sous-ensembles d'une position de grillage vers une position de déchargement du pain. L'utilisateur peut alors déplacer manuellement le sous-ensemble supérieur vers une position de remontée complémentaire.

L'objet de la présente invention vise par conséquent à combiner ces fonctions de manière à réaliser un grille-pain dont le chariot est susceptible d'occuper plusieurs positions au choix de l'utilisateur, sans que ce dernier ne soit tenu d'entraîner manuellement le chariot vers l'une ou l'autre de ces positions, et en particulier vers la position de remontée complémentaire.

Un autre objet de la présente invention vise à réaliser un tel système avec un nombre réduit de pièces mécaniques, lesquelles sont également agencées de façon simple, pour optimiser le fonctionnement du grille-pain.

Un objet supplémentaire de la présente invention vise à simplifier les différentes pièces constitutives du grille-pain et en particulier celles se rapportant au déplacement du chariot, pour réduire sensiblement le coût de fabrication dudit grille-pain.

Les objets de la présente invention sont atteints à l'aide d'un grille-pain comportant un chariot porte-pain mobile entre une position de grillage A, une position de maintien au chaud B et une position de repos C, ainsi que des moyens de commande pour sélectionner l'une des positions A, B ou C, ledit chariot étant associé à un ressort de rappel pour assurer sa remontée, lesdits moyens de commande permettant à l'utilisateur de procéder à un réglage de la course de remontée du chariot et par conséquent de bloquer ce dernier dans l'une des positions B ou C, caractérisé en ce que le grille-pain possède une position de remontée complémentaire D du chariot porte pain réglée par lesdits moyens de commande qui permettent de bloquer le chariot dans la position D par un réglage de la course de remontée dudit chariot.

D'autres avantages et caractéristiques de la présente invention ressortiront mieux à la lecture de la description, en référence aux dessins annexés, donnés à titre d'exemples non limitatifs, dans lesquels :
- la figure 1 représente une vue de face et en coupe d'un grille-pain conforme à l'invention,
- la figure 2 représente une autre vue de face et en coupe, avec un positionnement différent du chariot porte-pain agencé dans le grille-pain conforme à l'invention,
- la figure 3 représente une vue partielle selon la direction F de la figure 1,
- la figure 4 représente une vue partielle d'un détail des moyens de commande du grille-pain conforme à l'invention.

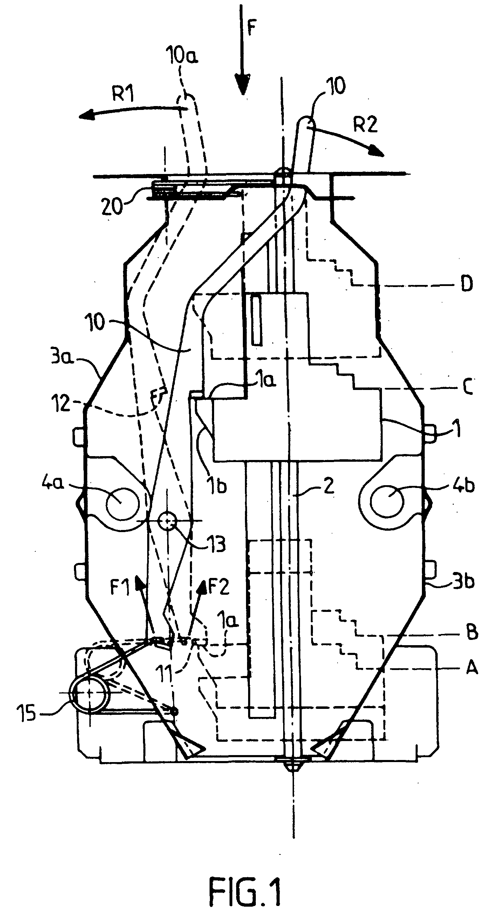

La figure 1 représente schématiquement différents niveaux d'un chariot porte-pain 1, lequel se déplace le long d'une tige de guidage 2, laquelle est solidaire du bâti du grille-pain.

Le chariot 1 peut ainsi être disposé dans une position de grillage A, dans une position de maintien au chaud B, dans une position de repos C, ou dans une position de remontée complémentaire D.

Le chariot 1 se déplace, ou est bloqué à un niveau donné dans l'enceinte de cuisson, entre des réflecteurs thermiques 3a, 3b, associés à des éléments chauffants 4a, 4b.

Le grille-pain schématisé à la figure 1 notamment, comporte également des moyens de commande, permettant à l'utilisateur de procéder à un réglage de la course de remontée du chariot 1.

Cette course permet de bloquer le chariot 1 dans l'une des positions B, C ou D, correspondant respectivement à une position de maintien au chaud, à une position de repos, ou à une position de remontée complémentaire.

Lors des opérations de grillage, le chariot 1 est amené dans sa position la plus basse possible, à savoir la position de grillage A. Un tel positionnement se fait en général contre la force de rappel d'un ressort susceptible d'entraîner le chariot 1 vers le haut, le long de la tige de guidage 2.

Le maintien du chariot 1 dans la position A est obtenu par tous moyens connus, et notamment par l'intermédiaire- d'un mécanisme piloté directement ou indirectement par un électroaimant. Un tel positionnement permet également de mettre en route, via un interrupteur électrique les éléments chauffants 4a, 4b.

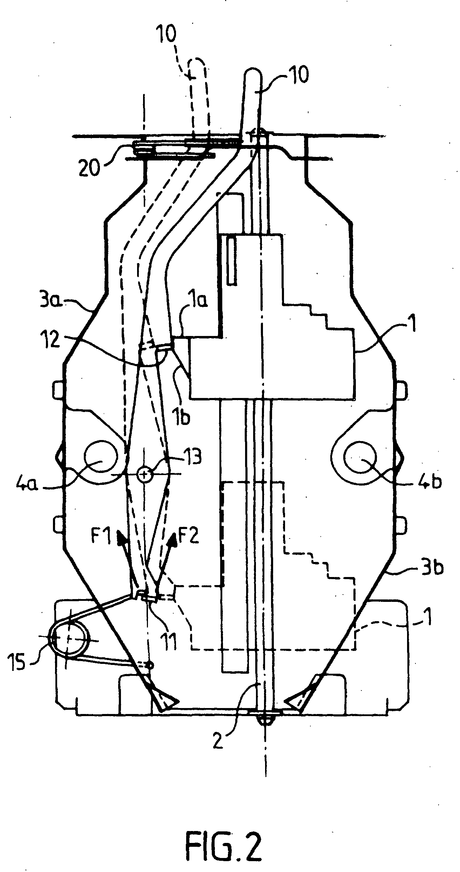

Les moyens de commande sont constitués d'un levier 10, présentant au moins deux butées 11, 12, pour immobiliser le chariot 1 lors de sa remontée. Le levier 10, représenté par exemple aux figures 1 et 2, est monté dans le grille-pain, de préférence sur une paroi latérale du bâti ou du réflecteur 3a, à l'aide d'un axe de pivotement 13.

Les butées 11, 12 sont réparties, l'une à l'extrémité inférieure du levier 10, et l'autre au-delà de l'axe de pivotement 13, dans une position supérieure. Le levier 10 peut ainsi être déplacé ou pivoté dans le sens R1 et R2 schématisés à la figure 1. Deux positions du levier 10 sont ainsi représentées l'une en trait plein, l'autre en traits pointillés. La représentation en trait plein correspond à un pivotement dans la direction R2 du levier 10, et par conséquent à un appui du chariot 1, contre la butée 12. Le chariot 1 se trouve ainsi immobilisé dans la position de repos C. A cet effet, le chariot 1 est pourvu d'un rebord 1a, pour venir en appui contre la butée 11 ou 12, lors de sa remontée.

Le chariot 1 présente également, à l'opposé du rebord 1a, un chanfrein 1b, susceptible de glisser le long du levier 10 et de dégager ce dernier pour ne pas entraver la descente dudit chariot 1. La descente du chariot 1 est schématisée, plus précisément à la figure 2, où l'on montre deux positions instantanées du chariot 1 lors de sa descente, l'une en trait plein, l'autre en traits pointillés.

Lorsque le levier 10 est pivoté dans le sens R1, c'est la butée 11 qui vient en regard du rebord 1a, et bloque ainsi le chariot 1 dans la position de maintien au chaud B. La course de remontée de la position de grillage A vers la position de maintien au chaud B est suffisante cependant pour libérer un interrupteur de contact et couper ou réduire l'alimentation des éléments chauffants 4a, 4b. Le levier 10 peut également être positionné de manière à ne pas entraver la remontée du chariot 1. Ce dernier remonte ainsi jusqu'à la position de remontée complémentaire D, après une opération de grillage. Ceci est particulièrement adapté pour des articles de petite taille. Avantageusement, le levier 10 est monté pivotant contre une force de rappel de ressort de basculement 15. Ce dernier est schématisé dans deux de ses positions, l'une en trait plein, l'autre en traits pointillés sur la figure 1. Lorsque le levier 10 est basculé dans le sens R2, le ressort de basculement 15 exerce une force F1 sur l'extrémité dudit levier 10, le maintenant ainsi dans sa position. Lorsque le levier 10 est basculé dans le sens R1, vers une position opposée, le ressort de basculement 15 exerce une force F2, sur l'extrémité dudit levier 10, de façon à le maintenir dans cette autre position, pour laquelle le ressort de basculement 15 est représenté en pointillés.

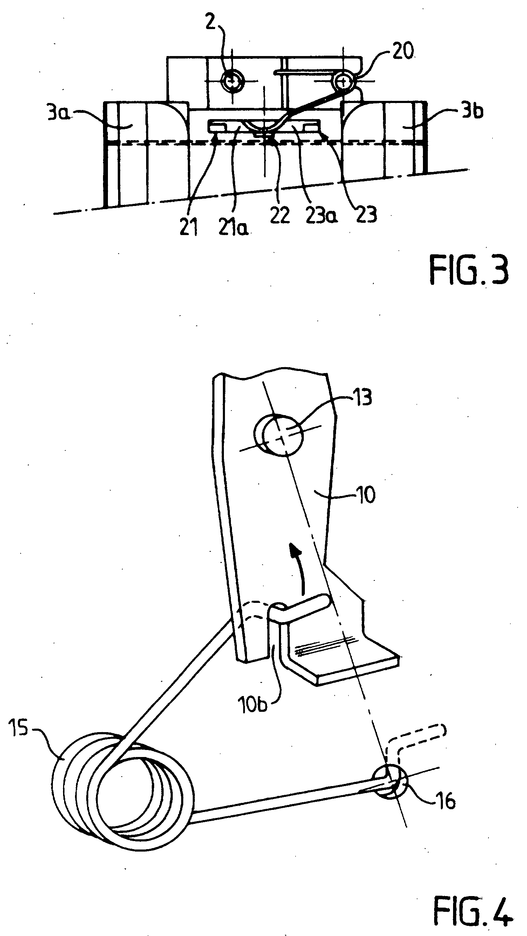

Préférentiellement, le levier 10, avec l'une de ses extrémités 10a, fait saillie hors du bâti du grille-pain et est associé à un système d'indexage représenté par exemple à la figure 3 et permettant de choisir l'une des positions 21, 23, 22 dudit levier 10, correspondant respectivement aux positions B, C et D du chariot 1.

Le système d'indexage comprend par exemple un ressort du type épingle 20, dont l'une des extrémités permet de bloquer le levier 10 dans une position centrale 22, correspondant à la position de remontée complémentaire D, du chariot 1.

Avantageusement, le système d'indexage peut prévoir une encoche dans laquelle viendra se loger le levier 10, dans la position centrale 22.

Le positionnement du levier 10, dans les positions extrêmes 21 et 23, permet audit levier 10 de pivoter légèrement vers la position centrale 22 lors de la descente du chariot 1 vers la position de grillage A.

Le chariot 1 peut effectivement venir en contact avec le levier 10 par l'intermédiaire du chanfrein 1b, lors de sa descente vers sa position de grillage A. Le positionnement du levier 10 aux repères 21 et 23 est stabilisé par l'intermédiaire du ressort de basculement 15. Ce dernier est schématisé plus en détail à la figure 4.

Des zones libres 21a et 23a dans le système d'indexage permettent ainsi l'escamotage du levier 10 pendant la descente du chariot 1, sous l'action conjuguée du chanfrein 1b, sur les butées 11 ou 12.

La figure 4 représente un exemple de connexion entre le levier 10 et le ressort de basculement 15. Ce dernier est logé par l'une de ses extrémités, dans une découpe 10b de la partie inférieure du levier 10. L'autre extrémité du ressort de basculement 15 est introduit dans une perforation 16 ménagée soit dans bâti, soit dans le réflecteur 3a du grille-pain.

D'autres variantes de réalisation du système de connexion entre le ressort de basculement 15 et le levier 10 peuvent également être envisagées sans sortir du cadre de la présente invention.

Un avantage du grille-pain conforme à l'invention, réside dans une utilisation simplifiée de ce dernier, laquelle consiste à régler au préalable de toute opération de grillage le niveau de remontée du chariot 1.

Avantageusement, le grille-pain conforme à l'invention peut également être pourvu d'un système de remontée douce ou amortie du chariot 1.

De tels systèmes sont connus sous forme de ressorts d'amortissement, de soufflets ou de pistons à échappement d'air, permettant ainsi d'éviter les chocs lors de la remontée du chariot 1, sous l'effet du ressort de rappel non représenté aux figures. Certains systèmes sont appelés communément "dash-pot".

Un autre avantage du grille-pain conforme à l'invention réside dans le fait qu'il est inutile d'utiliser un mécanisme de blocage électrique du type relais complémentaire pour bloquer le chariot 1 lors de sa remontée. Ceci permet de diminuer sensiblement le prix de revient d'un tel grille-pain.

## Revendications

1. Grille-pain comportant un chariot (1) porte-pain mobile entre une position de grillage A, une position de maintien au chaud B et une position de repos C, ainsi que des moyens de commande pour sélectionner l'une des positions A, B ou C, ledit chariot (1) étant associé à un ressort de rappel pour assurer sa remontée, lesdits moyens de commande permettant à l'utilisateur de procéder à un réglage de la course de remontée du chariot (1) et par conséquent de bloquer ce dernier dans l'une des positions B ou C, **caractérisé en ce que** le grille-pain possède une position de remontée complémentaire D du chariot (1) porte pain réglée par lesdits moyens de commande qui permettent de bloquer le chariot dans la position D par un réglage de la course de remontée dudit chariot.

2. Grille-pain selon la revendication 1, **caractérisé en ce que** les moyens de commande sont constitués d'un levier (10) présentant au moins deux butées (11, 12) pour immobiliser le chariot (1) lors de sa remontée.

3. Grille-pain selon la revendication 2, **caractérisé en ce que** le levier (10) est monté pivotant, contre une force de rappel d'un ressort de basculement (15).

4. Grille-pain selon la revendication 2 ou 3, **caractérisé en ce que** le levier (10), avec l'une de ses extrémités (10a) fait saillie hors du bâti du grille-pain et est associé à un système d'indexage permettant de choisir l'une des positions (21, 23, 22) du levier (10), correspondant respectivement aux positions B, C, et D du chariot (1).

5. Grille-pain selon l'une des revendications 1 à 4, **caractérisé en ce qu'**il comprend un système de remontée douce ou amortie du chariot (1).

## Claims

1. A toaster including a bread-carrying carriage (1) movable between a toasting position A, a warming position B, and a rest position C, together with control means for selecting one of the positions A, B, or C, said carriage (1) being associated with a return spring for raising it, said control means enabling the user to adjust the upward stroke of the carriage (1) and consequently to cause the carriage to stop in one or other of its positions B and C, the toaster being **characterized in that** it possesses an additional raised position D for the bread-carrying carriage (1) adjusted by said control means which enable the carriage to be stopped in position D by adjusting the upward stroke of said carriage.

2. A toaster according to claim 1, **characterized in that** the control means are constituted by a lever (10) having at least two abutments (11, 12) for preventing the carriage (1) from moving during its upward travel.

3. A toaster according to claim 2, **characterized in that** the lever (10) is pivotally mounted against a return force from a tilting spring (15).

4. A toaster according to claim 2 or claim 3, **characterized in that** the lever (10) together with one of its ends (10a) projects beyond the structure of the toaster and is associated with an indexing system enabling one of the positions (21, 23, 22) of the lever (10) to be selected, said positions corresponding respectively to the positions B, C, and D of the carriage (1).

5. A toaster according to any one of claims 1 to 4, **characterized in that** it includes a system for causing the carriage (1) to travel upwards gently or under damping.

## Patentansprüche

1. Brotröster mit einem Brot-Trägerschlitten (1), das zwischen einer Röststellung A, einer Warmehaltestellung B und einer Ruhestellung C beweglich ist, sowie mit Steuermitteln zum Auswählen einer der Stellungen A, B oder C, wobei der Trägerschlitten (1) einer Rückholfeder zugeordnet ist, um dessen Anheben zu gewährleisten, wobei die Steuermittel dem Benutzer ermöglichen, eine Einstellung des Anhebehubs des Trägerschlittens (1) vorzunehmen und somit letzteren in einer der Stellung B oder C festzustellen, **dadurch gekennzeichnet, daß** der Brotröster eine zusätzliche Stellung D zum Anheben des Trägerschlittens (1) aufweist, welche durch die Steuermittel eingestellt wird, die ermöglichen, den Trägerschlitten in der Stellung D über eine Einstellung des Anhebehubs des Trägerschlittens festzustellen.

2. Brotröster nach Anspruch 1, **dadurch gekennzeichnet, daß** die Steuermittel aus einem Hebel (10) bestehen, der wenigstens zwei Anschläge (11, 12) zum Feststellen des Trägerschlittens (1) bei dessen Anheben aufweist.

3. Brotröster nach Anspruch 2, **dadurch gekennzeichnet, daß** der Hebel (10) gegen eine Rückholkraft einer Schwenkfeder (15) drehbar gelagert ist

4. Brotröster nach Anspruch 2 oder 3, **dadurch gekennzeichnet, daß** der Hebel (10) mit einem seiner Enden (10a) aus dem Gestell des Brotrösters herausragt und einem Indexierungssystem zugeordnet ist, der ermöglicht, eine der Stellungen (21, 23, 22) des Hebels (10) zu wählen, welche jeweils den Stellungen B, C und D des Trägerschlittens entsprechen.

5. Brotröster nach einem der Ansprüche 1 bis 4, **dadurch gekennzeichnet, daß** es ein weiches oder gedämpftes System zum Anheben des Trägerschlittens (1) umfaßt.
